(19)

Europäisches
Patentamt
European
Patent Office
Office européen
des brevets

(11) **EP 1 734 713 B1**

(12) **EUROPEAN PATENT SPECIFICATION**

(45) Date of publication and mention
of the grant of the patent:
**05.08.2009 Bulletin 2009/32**

(51) Int Cl.:
***H04L 27/26*** (2006.01)

(21) Application number: **06011655.5**

(22) Date of filing: **06.06.2006**

(54) **Method of transmitting/receiving OFDM signal and mobile communication terminal thereof**

Verfahren zum Senden und Empfangen von OFDM-Signalen und mobiles Kommunikationsendgerät hierzu

Méthode de transmission et de réception d' un signal OFDM et terminal mobile de communication associé

(84) Designated Contracting States:
**DE FR GB IT**

(30) Priority: **16.06.2005 KR 20050051828**

(43) Date of publication of application:
**20.12.2006 Bulletin 2006/51**

(73) Proprietor: **LG Electronics Inc.**
**Seoul 150-010 (KR)**

(72) Inventor: **Lim, Byung Chun**
**Gwanak-gu**
**Seoul (KR)**

(74) Representative: **Katérle, Axel**
**Wuesthoff & Wuesthoff**
**Patent- und Rechtsanwälte**
**Schweigerstraße 2**
**81541 München (DE)**

(56) References cited:
**EP-A- 0 924 909**

• **PARK M ET AL: "PAPR REDUCTION IN OFDM TRANSMISSION USING HADAMARD TRANSFORM" ICC 2000. 2000 IEEE INTERNATIONAL CONFERENCE ON COMMUNICATIONS. CONFERENCE RECORD. NEW ORLEANS, LA, JUNE 18-21, 2000, IEEE INTERNATIONAL CONFERENCE ON COMMUNICATIONS, NEW YORK, NY : IEEE, US, vol. VOL. 1 OF 3, 18 June 2000 (2000-06-18), pages 430-433, XP001042984 ISBN: 0-7803-6284-5**
• **JONES A E ET AL: "Block coding scheme for reduction of peak to mean envelope power ratio of multicarrier transmission schemes" ELECTRONICS LETTERS, IEE STEVENAGE, GB, vol. 30, no. 25, 8 December 1994 (1994-12-08), pages 2098-2099, XP006001414 ISSN: 0013-5194**

**Description**

**BACKGROUND OF THE INVENTION**

**Field of the Invention**

The present invention relates to a method of transmitting/receiving an OFDM signal, and more particularly, to a method of transmitting/receiving an OFDM signal and mobile communication terminal thereof. Although the present invention is suitable for a wide scope of applications, it is particularly suitable for reducing PAPR (peak to average power ratio).

**Discussion of the Related Art**

Recently, great attention is paid to the OFDM (orthogonal frequency division multiplexing) transmission system which uses a plurality of orthogonal subcarriers for fast wireless multimedia data transmission. In the OFDM transmission system, modulated signals are paralleled and are then simultaneously transmitted using a plurality of orthogonal subcarriers. Through this data paralleling, the OFDM transmission system enables fast data transmission. Compared to the system using a single subcarrier, the OFDM transmission system becomes strong against multi-path fading channel environment since a symbol period of each subchannel is elongated as long as a length of a paralleled symbol.

Yet, it has been known that the OFDM transmission system is disadvantageous in high PAPR (peak to average power ratio). In particular, a time-domain OFDM signal consists of many subcarriers that are independently modulated. Hence, high PAPR is generated due to high-level signal components appearing in adding these subcarriers together at a same phase. The high-level signal components are clipped by a power amplifier or the like to bring about signal distortion, thereby degrading system transmission performance.

An article entitled "PAPR reduction in OFDM transmission using Hadamard transform" by M. Park et al., IEEE International Conference on Communications, New York, NY, volume 1 of 3, 18 June 2000, pages 430-433, describes the use of the Hadamard transform in an OFDM system to reduce the PAPR of the transmitted OFDM signal.

A. E. Jones et al.: "Block coding scheme for reduction of peak to mean envelope power ratio of multi carrier transmission schemes", Electronics Letters, 8 December 1994, volume 30, no. 25, pages 2098, 2099, suggest the use of a block coding scheme for the reduction of the peak to mean envelop power ratio in an OFDM system.

**SUMMARY OF THE INVENTION**

The present invention is directed to a method of transmitting/receiving an OFDM signal and mobile communication terminal thereof that substantially obviate one or more problems due to limitations and disadvantages of the related art.

An object of the present invention is to provide a method of transmitting/receiving an OFDM signal and mobile communication terminal thereof, by which high PAPR (peak to average power ratio) can be efficiently reduced in an OFDM transmission system. A method of transmitting an OFDM signal according to the present invention includes the steps of converting a bit stream data signal to parallel from serial, block-coding the paralleled data signal, Hadamard-transforming the block-coded data signal, performing IFFT (inverse fast Fourier transform) on the Hadamard-transformed data signal, and converting the IFFT-ed data signal from the parallel to the serial to transmit.

The block-coding step includes a sub-block coding step of block-coding the data signal by dividing the data signal into a plurality of sub-blocks.

Preferably, in the sub-block coding step, a check bit is added to each of the sub-blocks to enable a number of bits of a same value to become even in each of the sub-blocks.

More preferably, in the sub-block coding step, each of the sub-blocks includes a 3-bit data signal and a 1-bit check bit and wherein a 3/4 code rate is used.

In another aspect of the present invention, a method of receiving an OFDM signal includes the steps of receiving a data signal transmitted by OFDM, converting the received data signal to parallel from serial, performing FFT (Fast Fourier Transform) on the paralleled data signal, performing inverse Hadamard transform on the Fast-Fourier-transformed data signal, block-decoding the inverse-Hadamard-transformed data signal, and converting the block-decoded data signal to the serial from the parallel.

The block decoding step is a sub-block decoding step of decoding a sub-block coded data signal.

Preferably, in the sub-block decoding step, the sub-block coded data signal is decoded so that a check bit is added to each of the sub-blocks to enable a number of bits of a same value to become even in each sub-block.

More preferably, in the sub-block decoding step, the data signal sub-block-coded at a 3/4 code rate is decoded and each sub-block comprises a 3-bit data signal and a 1-bit check bit.

In another aspect of the present invention, a mobile communication terminal includes a serial-to-parallel conversion module receiving a data signal transmitted by OFDM and converting the received data signal to parallel from serial, an FFT module performing FFT (Fast Fourier Transform) on the paralleled data signal, an inverse Hadamard transform performing inverse Hadamard transform on the Fast-Fourier-transformed data signal, a block decoding module block-decoding the inverse-Hadamard-transformed data signal, and a parallel-to-serial conversion module converting the block-decoded data signal to the serial from the parallel.

The block decoding module is a sub-block decoding module decoding a sub-block coded data signal.

Preferably, the sub-block decoding module decodes the sub-block coded data signal so that a check bit is added to each sub-block to enable a number of bits of a same value to become even in the each sub-block.

More preferably, the sub-block decoding module decodes the data signal sub-block-coded at a 3/4 code rate and wherein each sub-block comprises a 3-bit data signal and a 1-bit check bit.

Preferably, the mobile communication terminal is a broadcast mobile communication terminal.

Preferably, the mobile communication terminal is a mobile broadcast mobile communication terminal.

In another aspect of the present invention, an OFDM (orthogonal frequency division multiplexing) transmitting system includes a serial-to-parallel conversion module converting a bit stream data signal to parallel from serial, a block encoding module block-coding the paralleled data signal, a Hadamard transform module Hadamard-transforming the block-coded data signal, an IFFT module performing IFFT (inverse fast Fourier transform) on the Hadamard-transformed data signal, and a parallel-to-serial conversion module converting the IFFT-ed data signal from the parallel to the serial.

The block coding module block-codes the data signal by dividing the data signal into a plurality of sub-blocks.

Preferably, the sub-block coding module performs sub-block coding to add a check bit to each sub-block to enable a number of bits of a same value to become even in the each sub-block.

More preferably, the sub-block coding module performs the sub-block coding at a 3/4 code rate and the each sub-block comprises a 3-bit data signal and a 1-bit check bit.

It is to be understood that both the foregoing general description and the following detailed description of the present invention are exemplary and explanatory and are intended to provide further explanation of the invention as claimed.

## BRIEF DESCRIPTION OF THE DRAWINGS

The accompanying drawings, which are included to provide a further understanding of the invention, illustrate embodiment(s) of the invention and together with the description serve to explain the principle of the invention. In the drawings:

FIG. 1 is a block diagram of an OFDM transmission system to explain a principle for modulating N subcarriers;

FIG. 2 is a graph of a peak envelope power of an OFDM transmission system output observed in a time domain by varying data 0000 to 1111 on the assumption of four OFDM input data sequences;

FIGs. 3A to 3D are graphs of peak envelope powers according to various code rates in an OFDM system using sixteen subcarriers, respectively;

FIG. 4 is a block diagram of an OFDM transmission system according to the present invention; and

FIG. 5 and FIG. 6 are graphs of simulations of the present invention, respectively.

## DETAILED DESCRIPTION OF THE INVENTION

Reference will now be made in detail to the preferred embodiments of the present invention, examples of which are illustrated in the accompanying drawings.

First of all, a PAPR and model of an OFDM transmission system considered by the present invention are explained as follows.

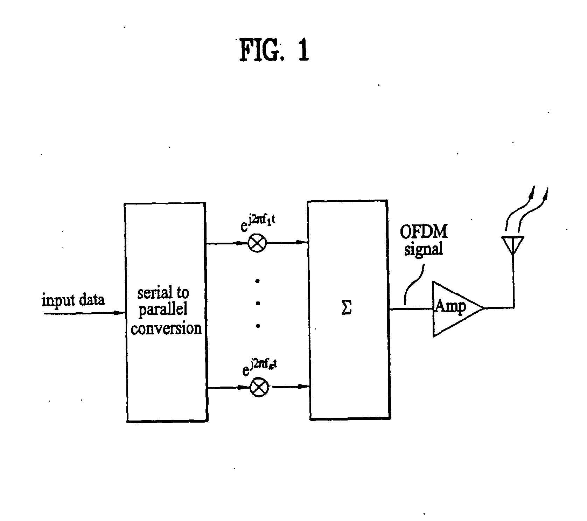

FIG. 1 is a block diagram of an OFDM transmission system to explain a principle for modulating N subcarriers.

An input data sequence having a high data rate is divided into a plurality of data sequences each of which has a low data rate. And, a plurality of the data sequences are modulated by a plurality of subcarriers and are then combined to be transmitted.

An OFDM signal is constructed with a total of subcarriers modulated by PSK (phase shift keying) or QAM (quadrature amplitude modulation).

An OFDM signal modulated by BPSK is expressed as Formula 1.

[Formula 1]

$$s(t) = \sum_{k=0}^{N-1} c_k e^{j2\pi\frac{kt}{T}}$$

In Formula 1, 'N' indicates the number of subcarriers, '$c_k (\in \{-1, 1\})$' indicates a data symbol in a frequency domain corresponding to a $k^{th}$ subcarrier of an OFDM symbol, and 'T' indicates a duration of one OFDM symbol.

Since an OFDM signal in a time domain consists of many independently-modulated subcarriers, if they are added together at the same phase, a high-level signal is generated to bring about a high PAPR. PAPR of a given frequency domain sample c={$c_0$, $c_1$, ..., $c_{N-1}$} can be defined as Formula 2.

[Formula 2]

$$PAPR = MAX \frac{|s(t)|^2}{E[\,|s(t)|^2\,]}$$

In Formula 2, 'E[*]' indicates an average of '*'. A maximum power of an OFDM signal given in Formula 2 can be expressed as Formula 3.

[Formula 3]

$$|s(t)|^2 = ( \sum_{k=0}^{N-1} c_k e^{j2\pi\frac{kt}{T}} )^2$$

$$= N + 2 \sum_{k=0}^{N-2} \sum_{i=k+1}^{N-1} c_k c_i \cos[2\pi(i-k)t]$$

$$= N + 2P_0(t)$$

In Formula 3, '$P_0(t)$' indicates an OFDM signal power and can be expressed as Formula 4.

[Formula 4]

$$P_0(t) = \sum_{k=0}^{N-2} \sum_{i=k+1}^{N-1} c_k c_i \cos(2\pi kt)\cos(2\pi)$$

$$= \sum_{k=1}^{N-1} C_k \cos(2\pi kt)$$

In Formula 4, it can be interpreted as a total of cosine components weighted by an autocorrelation function $C_k$ of a data bit in a frequency domain. In this case, the autocorrelation function $C_k$ can be defined as Formula 5.
[Formula 5]

$$C_k = \sum_{i=0}^{N-k-1} c_i c_{i+k}$$

Since a mean power is always constant as 'N', PAPR in Formula 3 can be finally expressed as Formula 6.
[Formula 6]

$$PAPR = MAX(1 + \frac{2}{N} P_0(t))$$

In Formula 6, it can be seen that PAPR is determined by a sidelobe value of an input sequence, i.e.,

$$\frac{2}{N} P_0(t)$$ .

PAPR reducing scheme using a block coding scheme as a basis of an OFDM signal transmitting/receiving method according to the present invention is explained in brief as follows.

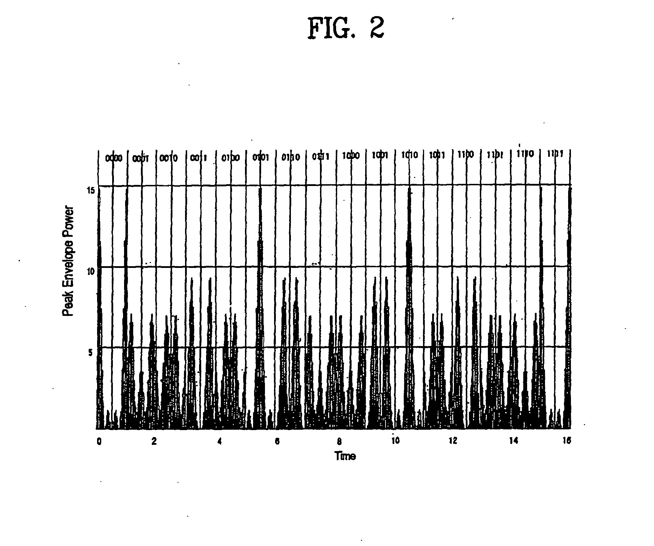

FIG. 2 is a graph of a peak envelope power of an OFDM transmission system output observed in a time domain by varying data 0000 to 1111 on the assumption of four OFDM input data sequences. From FIG. 2, as mentioned in the foregoing description of Formula 6, it can be seen that the PAPR value is determined by the autocorrelation function $C_k$ of a data sequence.
[Table 1]

| Binary Code | Decimal | $C_1$ | $C_2$ | $C_3$ | PAPR |
|---|---|---|---|---|---|
| 0000 | 0 | 3.0 | 2.0 | 1.0 | 4.00 |
| 0001 | 1 | 1.0 | 0.0 | -1.0 | 1.77 |
| 0010 | 2 | -1.0 | 0.0 | 1.0 | 1.77 |

(continued)

| Binary Code | Decimal | $C_1$ | $C_2$ | $C_3$ | PAPR |
|---|---|---|---|---|---|
| 0011 | 3 | 1.0 | -2.0 | -1.0 | 2.37 |
| 0100 | 4 | -1.0 | 0.0 | 1.0 | 1.77 |
| 0101 | 5 | -3.0 | 2.0 | -1.0 | 4.00 |
| 0110 | 6 | -1.0 | -2.0 | 1.0 | 2.37 |
| 0111 | 7 | 1.0 | 0.0 | -1.0 | 1.77 |
| 1000 | 8 | 1.0 | 0.0 | -1.0 | 1.77 |
| 1001 | 9 | -1.0 | -2.0 | 1.0 | 2.37 |
| 1010 | 10 | -3.0 | 2.0 | -1.0 | 4.00 |
| 1011 | 11 | -1.0 | 0.0 | 1.0 | 1.77 |
| 1100 | 12 | 1.0 | -2.0 | -1.0 | 2.37 |
| 1101 | 13 | -1.0 | 0.0 | 1.0 | 1.77 |
| 1110 | 14 | 1.0 | 0.0 | -1.0 | 1.77 |
| 1111 | 15 | 3.0 | 2.0 | 1.0 | 4.00 |

Table 1 shows values of PAPR and $C_k$ for four input data sequences in an OFDM system using BPSK modulation.

In particular, a sidelobe value of an autocorrelation function has six kinds of values and a PAPR value is determined by three values.

In observing these values, it can be seen that the PAPR value increases in proportion to the sidelobe value. And, it can be also seen that the PAPR can be reduced by excluding a use of four data words having PAPR of 4.00 and four data words having PAPR of 2.37. This principle can be easily implemented by a block coding system. For instance, in making 3-bit data correspond to a 4-bit sequence using 1-bit additional information, PAPR can be reduced by avoiding a use of a data word that increases the PAPR. One of rules found in Table 1 is that an odd number of 1's exists in data words having low PAPR in common. Hence, block coding is facilitated using an odd parity check bit.

Yet, the block coding scheme is insufficient to reduce PAPR in case of using lots of subcarriers. In reducing PAPR using an odd parity check bit of a last bit in the block coding scheme, a probability that bit numbers of '1' and '0' overlapped at a specific timing point become equivalent to each other is lowered as the subcarriers increase. So, the cancellation effect by the same phase is reduced.

To solve this problem, the present invention proposes the following OFDM signal transmitting/receiving method. To maximize the reducing effect of PAPR, the present invention introduces a hybrid-type PAPR scheme combining Hadamard transform and a sub-block coding scheme of performing block coding by dividing subcarriers into sub-blocks in case of using lots of subcarriers together.

In the following description, it is assumed that in an OFDM system having sixteen subcarriers, four subcarriers are combined into one sub-block to perform ¾ coding on each sub-block. Yet, the present invention is applicable to an OFDM system using sixteen subcarriers more or less and is further applicable to various codings (e.g., 7/8 coding) as well as 3/4 coding. So, the scope of the present invention is not limited to the following description.

Hadamard transform used by the present invention is based on a principle that PAPR is reduced by decreasing a sidelobe value of an autocorrelation function of an input sequence. If an input sequence having a high correlation is inputted to IFFT (Inverse Fast Fourier Transform) in OFDM, it is highly probable that a high peak power will appear. IFFT can be represented by multiplying a sine wave of an orthogonal frequency by an input sequence. If the input sequence has high correlation, it is highly probable that sine waves appearing as a result of IFFT will be represented with the same phase. As mentioned in the foregoing description, PAPR is increased if sine waves are added at the same phase. To reduce PAPR, the sine waves should avoid lying at the same phase. In another aspect, if a sidelobe of an input sequence is small, an autocorrelation characteristic of an input sequence in a frequency domain gets closer to an impulse and a spectrum appears flat in a time domain. So, PAPR appears small as well. So, if a sidelobe of an IFFT input sequence is lowered by Hadamard transform scheme, it is able to reduce PAPR. Namely, since a data sequence through Hadamard transform has a sidelobe smaller than that of an original data sequence, PAPR can be reduced.

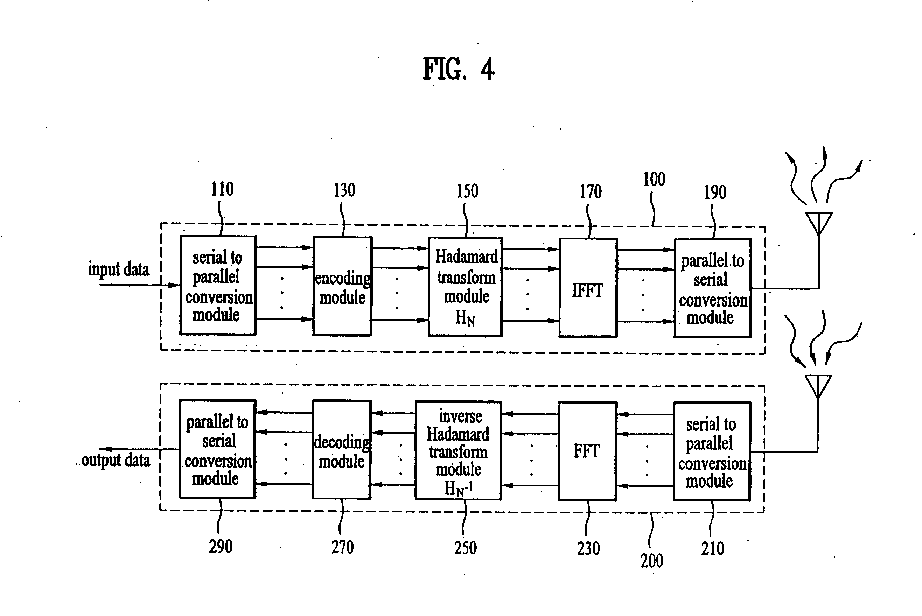

FIG. 4 is a block diagram of an OFDM transmission system according to the present invention.

Referring to FIG. 4, an OFDM transmission system 100 according to the present invention, unlike the former system shown in FIG. 1, performs sub-block coding on a data sequence paralleled by a serial-to-parallel conversion module 110 using an encoding module 130. And, a corresponding result is inputted to a Hadamard transform module 150. An output of the Hadamard transform module 150 passes through an IFFT 170 and a parallel-to-serial conversion module 190 to propagate as a time-domain signal via channel.

In the method proposed by the present invention, sub-block coding is carried out in a following manner.

First of all, input data passes through the serial-to-parallel conversion module 110 to be converted to parallel data expressed as Formula 7.

[Formula 7]

$$c = [c_1(1), c_1(2), c_1(3), c_2(1), \dots, c_L(1), c_L(2), c_L(3)]$$

In Formula 7, it is assumed that the number (N) of used subcarriers is '4L' (N=4L), where 'L' is the number of sub-blocks. In particular, a 3-bit input data word is constructed with one sub-block. Thus, the paralleled input data is divided into several sub-blocks. And, one check bit is added so that the number of bits of the same value can be always even in each of the sub-blocks. In particular, a check bit is added so that the number of '+1' or '-1' can be always an even number in one sub-block. For instance, if c=[1, 1, - 1] and if this method is applied, a resulting codeword becomes r=[1, 1, -1, -1]. Hence, a sub-block coded codeword can be represented as Formula 8.

[Formula 8]

$$r = [r_1(1), r_1(2), r_1(3), P_1(1), \dots, r_L(1), r_L(2), r_L(3), P_L(1)]$$

In Formula 8, $P_N(1)$ is a check bit that enables the number of bits of the same sign to become an even number.

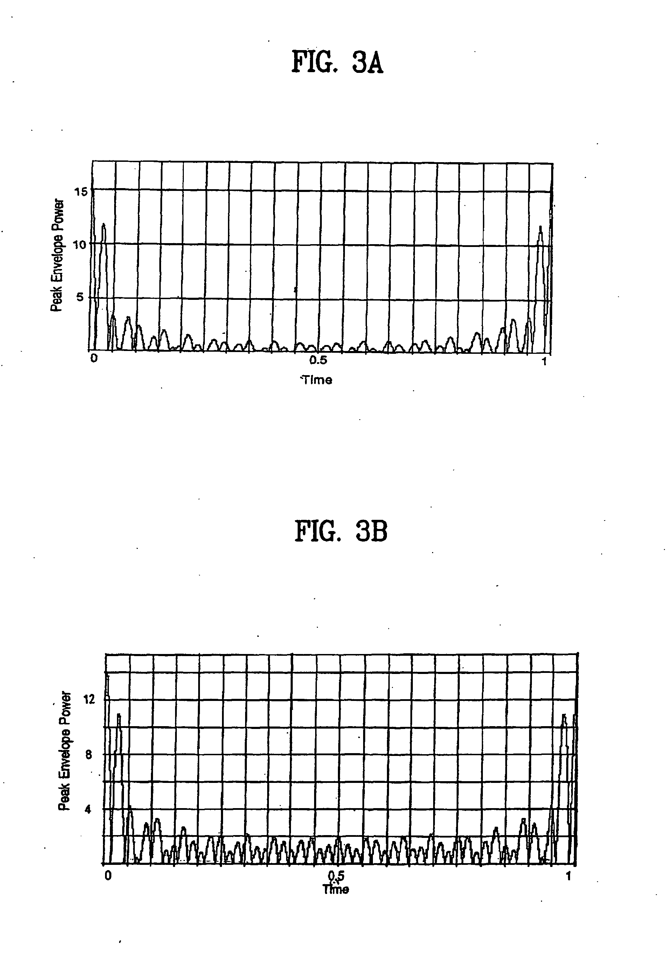

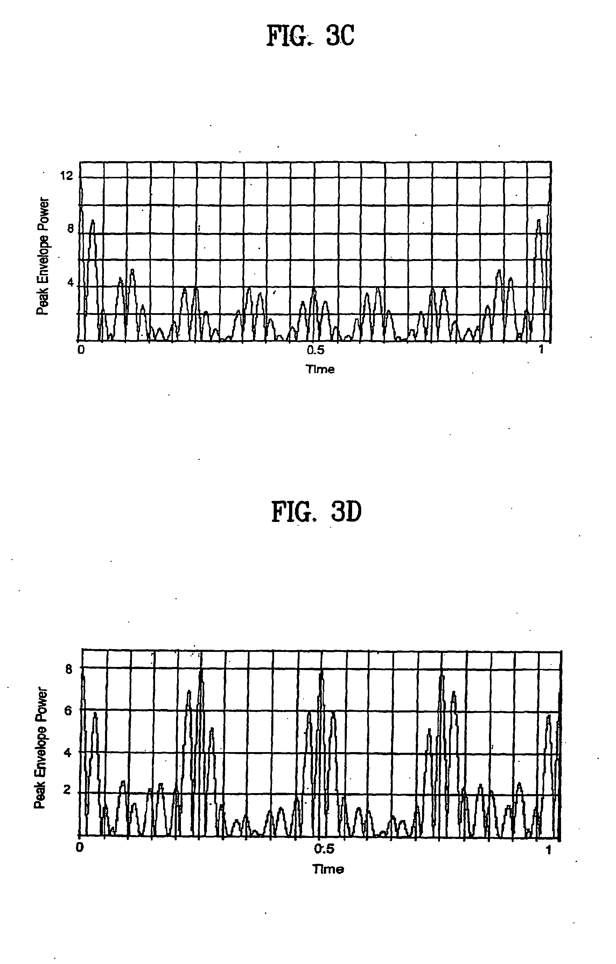

In the sub-block coding according to the embodiment of the present invention, a check bit is placed at an end of each sub-block. So, a 3-bit data word becomes a 4-bit codeword. In this proposed method, a code rate of ¾ is used for sub-block coding. This is because a low PAPR value, as shown in FIGs. 3A to 3D, can be obtained by reducing a code rate in general. And, the ¾ code rate provides optimal performance. In this case of the OFDM system using sixteen subcarriers, FIG. 3A shows a peak envelope power in case that block coding is not performed, FIG. 3B shows a peak envelope power in case that block coding of 15/16 code rate including 15 data bits and one check bit is used, FIG. 3C shows a peak envelope power in case that block coding of 7/8 code rate including two sub-blocks is used, and FIG. 3D shows a peak envelope power in case that block coding of 3/4 code rate including four sub-blocks is used.

In the present invention, Hadamard transform is applied to a result of the sub-block coding. If a length of a sub-block coded codeword is 'N', N×N Hadamard matrix, as shown in Formula 9, is multiplied. In this case, an important characteristic of the Hadamard matrix is that the number of '1' and the number of '-1' placed in a row and column are always even. So, one row and the other row in the Hadamard matrix are orthogonal to each other and their correlation value is always 0. Using this characteristic, a sidelobe of IFFT input data can be reduced. Hence, PAPR in the OFDM system can be reduced.

[Formula 9]

$$H_{2N}^W = \frac{1}{\sqrt{2N}} \begin{bmatrix} H_N^W & H_N^W \\ H_N^W & H_N^W \end{bmatrix}$$

$$H_2^W = \frac{1}{\sqrt{2}} \begin{bmatrix} + & + \\ + & - \end{bmatrix}$$

In the method proposed by the present invention, it is noteworthy that an autocorrelation value of a codeword appears in an impulse form if a sequence exists as a row or column within Hadamard matrix like the sub-block-coded codeword. This is valid if a sequence of opposite sign exists in Hadamard matrix.

For instance, assuming that there are four subcarriers, if a sub-block coded codeword is r=[1, 1, -1, - 1], a sequence transformed into $4 \times 4$ Hadamard matrix becomes [0, 0, -4, 0]. So, the autocorrelation function value of the sequence becomes [16, 0, 0, 0]. Hence, a signal in a time domain through IFFT has a flat form.

Thus, since a sidelobe of the autocorrelation function of the sequence Hadamard-transformed after sub-block coding is smaller than that of the sequence Hadamard-transformed only, the PAPR can be further reduced. This is because the autocorrelation functions of the sequence and their power distribution spectra configure Fourier transform pairs, respectively.

Explained in the following description is a result of simulation for the measurement of the reduction of PAPR obtainable in case of the method according to the present invention.

First of all, assumptions for the simulation are explained as follows.

It is assumed that the number of subcarriers is 4, 8, 16 or 32. It is assumed that BPSK modulation is used for user's data. A system used for the simulation has the configuration shown in FIG. 4.

Table 2 shows PAPR obtainable in case of applying the method proposed by the present invention to an OFDM system.

[Table 2] (Unit: dB)

| No. of subcarriers | No Reduction | Block coding | Sub-block Coding | Hadamard Transform | Scheme by the Invention |
|---|---|---|---|---|---|
| 4 | 6.02 | 2.47 | 2.47 | 2.46 | 0 |
| 8 | 9.03 | 6.53 | 5.33 | 4.96 | 2.76 |
| 16 | 12.04 | 10.88 | 8.34 | 7.47 | 5.37 |
| 32 | 15.05 | 14.49 | 12.55 | 11.32 | 9.27 |

In Table 2, PAPR performances in various schemes are compared to each other.

In case of using block coding scheme, a reduced quantity of PAPR is lowered as the number of subcarriers increases. Namely, if the number of subcarriers is 4, more than 3dB of PAPR is reduced. Yet, if the number of subcarriers becomes 8 only, the reduced quantity becomes about 2.5dB. So, the effect is reduced. This coincides with the aforesaid explanation.

Results using sub-block coding to compensate the disadvantages of block-coding show that the PAPR reduced quantity is enhanced better than that of the block coding. This coincides with the aforesaid explanation as well.

A scheme of applying Hadamard transform to an input sequence directly provides performance is better than the block or sub-block coding scheme in performance. Yet, this result indicates that the reduced extent of PAPR is reduced as the number of subcarriers increases.

In the system to which the scheme proposed by the present invention is applied, PAPR reduced quantity of about 6dB appears regardless of the number of subcarriers. This indicates that the reduction performance of PAPR is considerably enhanced further than that of the aforesaid scheme.

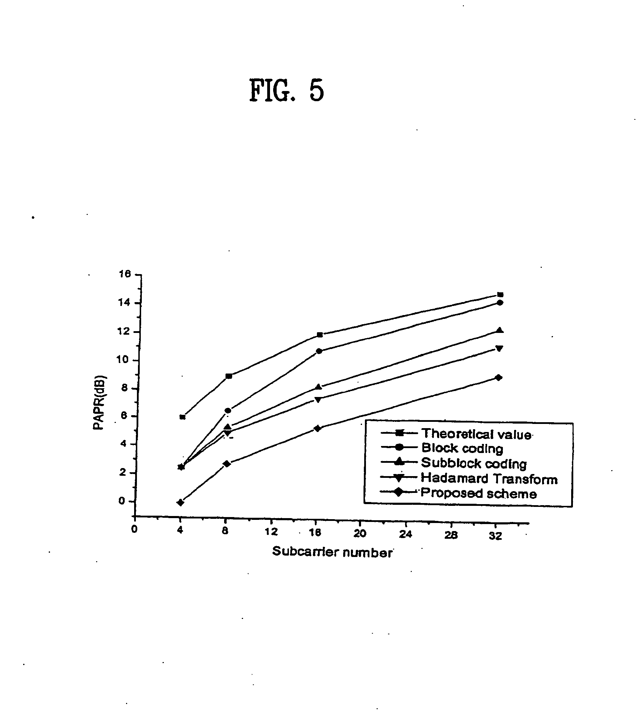

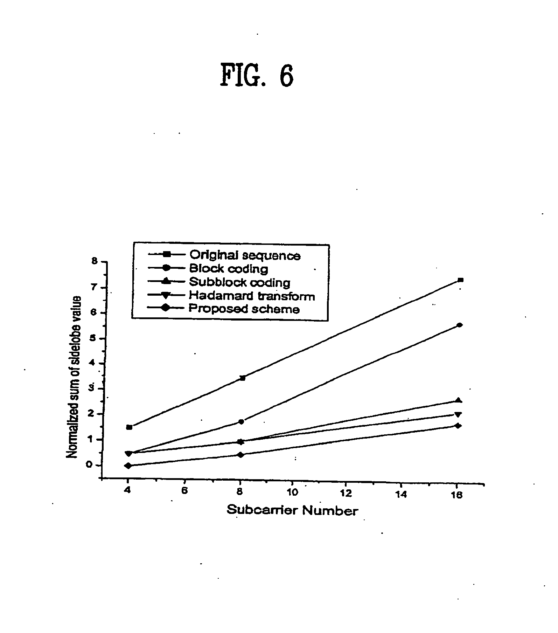

FIG. 5 shows a result of the simulation of Table 2. And, FIG. 6 shows a total of sidelobe values of sequences prior to IFFT input in various PAPR reducing schemes.

The sidelobe value, as mentioned in the foregoing description, is considerably associated with the PAPR value. By selecting a sequence having a peak power in each of the schemes, an autocorrelation function value of the selected sequence is found. It can be seen that the scheme proposed by the present invention shows a lowest sidelobe value. This means that the scheme of the present invention offers the biggest PAPR reducing effect.

An OFDM receiving system (e.g., mobile communication terminal for mobile broadcast reception) 200, which is capable of receiving a signal transmitted from the OFDM transmitting system to which the scheme of the present invention is applied, is explained with reference to FIG. 4 as follows.

Referring to FIG. 4, a serial-to-parallel conversion module 210 of a receiving system 200 receives a data signal transmitted by OFDM and then converts the received signal to a paralleled signal.

Subsequently, an FFT (Fast Fourier Transform) module 230 performs FFT on the paralleled data signal.

An inverse Hadamard transform module 250 performs inverse Hadamard transform on the FFT-ed data signal.

A block decoding module 270 performs block decoding on the inverse-Hadamard-transformed data signal. Preferably, the block decoding module 270 is a sub-block decoding module that decodes the block-coded data signal by dividing the data signal into a plurality of sub-blocks. More preferably, the sub-block decoding module decodes the data signal sub-block-coded by ¾ code rate, in which each of the sub-blocks includes a 30bit data signal and a 1-bit check bit.

A parallel-to-serial conversion module 290 then converts the block-decoded data signal to serial from parallel.

In the above-description of the present invention, the scheme of reducing PAPR in the OFDM system is proposed in a manner of simultaneously employing sub-block coding and Hadamard transform.

And, the performance of the proposed scheme is compared to those of conventional schemes. The scheme proposed by the present invention utilizes the characteristic that a correlation value between rows or columns of Hadamard matrix is mutually zero.

Accordingly, the present invention provides the following effects or advantages.

First of all, the present invention can reduce correlation existing in the input data using the characteristic of the Hadamard matrix.

Secondly, by simultaneously employing the sub-block coding of the code rate 3/4 and Hadamard transform, the present invention compensates for the disadvantage that the PAPR reducing effect is decreased in the scheme using Hadamard transform only in case of increasing the number of subcarriers. Specifically, this scheme can provide an ideal value of PAPR in case that the number of subcarriers is four.

In the computer simulation, the scheme using block coding only brings about the PAPR reducing effect of about 3dB. Yet, the scheme of the present invention brings about the PAPR reducing effect of about 6dB.

Thirdly, the scheme proposed by the present invention provides reduction performance having almost no relation to the increment of the number of subcarriers and additional PAPR reduction about 2dB further than that of the scheme that uses Hadamard transform only.

## Claims

1. A method of transmitting an OFDM signal, comprising the steps of:

   converting a bit stream data signal to parallel from serial;
   block-coding the paralleled data signal;
   Hadamard-transforming the block-coded data signal;
   performing IFFT (inverse fast Fourier transform) on the Hadamard-transformed data signal; and
   converting the IFFT-ed (inverse fast Fourier transformed) data signal from the parallel to the serial to transmit;

   wherein the block-coding step comprises a sub-block coding step of block-coding the data signal by dividing the data signal into a plurality of sub-blocks.

2. The method of claim 1, wherein in the sub-block coding step, a check bit is added to each of the sub-blocks to enable a number of bits of a same value to become even in each of the sub-blocks.

3. The method of claim 2, wherein in the sub-block coding step, each of the block-coded sub-blocks comprises a 3-bit data signal and a 1-bit check bit and wherein a 3/4 code rate is used.

4. A method of receiving an OFDM signal, comprising the steps of:

   receiving a data signal transmitted by OFDM;
   converting the received data signal to parallel from serial;
   performing FFT (Fast Fourier Transform) on the paralleled data signal;
   performing inverse Hadamard transform on the Fast-Fourier-transformed data signal;
   block-decoding the inverse-Hadamard-transformed data signal; and
   converting the block-decoded data signal to the serial from the parallel;

   wherein the block decoding step is a sub-block decoding step of decoding a sub-block coded data signal.

5. The method of claim 4, wherein in the sub-block decoding step, the data signal sub-block coded by adding a check bit to each of the sub-blocks to enable a number of bits of a same value to become even in each sub-block is decoded.

6. The method of claim 5, wherein in the sub-block decoding step, the data signal sub-block-coded at a 3/4 code rate is decoded.

**7.** A mobile communication terminal comprising:

a serial-to-parallel conversion module (210) receiving a data signal transmitted by OFDM and converting the received data signal to parallel from serial;
an FFT module (230) performing FFT (Fast Fourier Transform) on the paralleled data signal;
an inverse Hadamard transform module (250) performing inverse Hadamard transform on the Fast-Fourier-transformed data signal;
a block decoding module (270) block-decoding the inverse-Hadamard-transformed data signal; and
a parallel-to-serial conversion module (290) converting the block-decoded data signal to the serial from the parallel; wherein the block decoding module (270) is a sub-block decoding module decoding a sub-block coded data signal.

**8.** The mobile communication terminal of claim 7,
wherein the sub-block decoding module (270) decodes the data signal sub-block coded such that a check bit is added to each sub-block to enable a number of bits of a same value to become even in the each sub-block.

**9.** The mobile communication terminal of claim 8,
wherein the sub-block decoding module decodes the data signal sub-block-coded at a 3/4 code rate.

**10.** The mobile communication terminal of any one of claims 7-9,
wherein the mobile communication terminal is a broadcast terminal.

**11.** An OFDM (orthogonal frequency division multiplexing) transmitting system comprising:

a serial-to-parallel conversion module (110) converting a bit stream data signal to parallel from serial;
a block encoding module (130) block-coding the paralleled data signal;
a Hadamard transform module (150) Hadamard-transforming the block-coded data signal;
an IFFT module (170) performing IFFT (inverse fast Fourier transform) on the Hadamard-transformed data signal; and
a parallel-to-serial conversion module (190) converting the IFFT-ed data signal from the parallel to the serial;

wherein the block coding module inadapted to block-code the data signal by dividing the data signal into a plurality of sub-blocks.

**12.** The OFDM transmitting system of claim 11, wherein the sub-block coding module (130) performs sub-block coding to add a check bit to each sub-block to enable a number of bits of a same value to become even in the each sub-block.

**13.** The OFDM transmitting system of claim 12, wherein the sub-block coding module (130) performs the sub-block coding at a 3/4 code rate.

**Patentansprüche**

**1.** Verfahren zum Übertragen eines OFDM-Signals, umfassend die Schritte:

- Umwandeln eines Bitstrom-Datensignals von seriell in parallel,
- Blockcodieren des parallelisierten Datensignals,
- Hadamard-Transformieren des blockcodierten Datensignals,
- Durchführen einer IFFT (inverse schnelle Fourier-Transformation) an dem Hadamard-transformierten Datensignal und
- Umwandeln des IFFT-transformierten Datensignals von parallel in seriell zum Zweck der Übertragung,

wobei der Blockcodierungsschritt einen Teilblockcodierungsschritt des Blockcodierens des Datensignals durch Teilen des Datensignals in mehrere Teilblöcke umfasst.

**2.** Verfahren nach Anspruch 1, wobei bei dem Teilblockcodierungsschritt jedem der Teilblöcke ein Prüfbit hinzugefügt wird, damit in jedem der Teilblöcke die Anzahl gleichwertiger Bits gerade gemacht werden kann.

**3.** Verfahren nach Anspruch 2, wobei bei dem Teilblockcodierungsschritt jeder der blockcodierten Teilblöcke ein 3-Bit-Datensignal und ein 1-Bit-Prüfbit enthält und eine 3/4-Coderate verwendet wird.

**4.** Verfahren zum Empfangen eines OFDM-Signals, umfassend die Schritte:

- Empfangen eines mittels OFDM übertragenen Datensignals,
- Umwandeln des empfangenen Datensignals von seriell in parallel,
- Durchführen einer FFT (schnelle Fourier-Transformation) an dem parallelisierten Datensignal,
- Durchführen einer inversen Hadamard-Transformation an dem FFT-transformierten Datensignal,
- Blockdecodieren des invers Hadamard-transformierten Datensignals und
- Umwandeln des blockdecodierten Datensignals von parallel in seriell,

wobei der Blockdecodierungsschritt ein Teilblockdecodierungsschritt des Decodierens eines teilblockcodierten Datensignals ist.

**5.** Verfahren nach Anspruch 4, wobei bei dem Teilblockdecodierungsschritt das Datensignal decodiert wird, das teilblockcodiert wurde durch Hinzufügen eines Prüfbits zu jedem der Teilblöcke, damit in jedem Teilblock die Anzahl gleichwertiger Bits gerade gemacht werden kann.

**6.** Verfahren nach Anspruch 5, wobei bei dem Teilblockdecodierungsschritt das Datensignal decodiert wird, das mit einer 3/4-Coderate teilblockcodiert wurde.

**7.** Mobiles Kommunikationsendgerät, umfassend:

- ein Seriell/Parallel-Umwandlungsmodul (210), welches ein mittels OFDM übertragenes Datensignal empfängt und das empfangene Datensignal von seriell in parallel umwandelt,
- ein FFT-Modul (230), welches eine FFT (schnelle Fourier-Transformation) an dem parallelisierten Datensignal durchführt,
- ein inverses Hadamard-Transformationsmodul (250), welches eine inverse Hadamard-Transformation an dem FFT-transformierten Datensignal durchführt,
- ein Blockdecodierungsmodul (270), welches das invers Hadamard transformierte Datensignal blockdecodiert, und
- ein Parallel/Seriell-Umwandlungsmodul (290), welches das blockdecodierte Datensignal von parallel in seriell umwandelt,

wobei das Blockdecodierungsmodul (270) ein Teilblockdecodierungsmodul ist, welches ein teilblockcodiertes Datensignal decodiert.

**8.** Mobiles Kommunikationsendgerät nach Anspruch 7, wobei das Teilblockdecodierungsmodul (270) das Datensignal decodiert, das so teilblockcodiert wurde, dass ein Prüfbit zu jedem Teilblock hinzugefügt wurde, um in jedem Teilblock die Anzahl gleichwertiger Bits gerade machen zu können.

**9.** Mobiles Kommunikationsendgerät nach Anspruch 8, wobei das Teilblockdecodierungsmodul das Datensignal decodiert, das mit einer 3/4-Coderate teilblockcodiert wurde.

**10.** Mobiles Kommunikationsendgerät nach einem der Ansprüche 7-9, wobei das mobile Kommunikationsendgerät ein rundfunkfähiges Endgerät ist.

**11.** OFDM (Orthogonales Frequenzmultiplex) -Übertragungssystem, umfassend:

- ein Seriell/Paraliel-Umwandlungsmodul (110), welches ein Bitstrom-Datensignal von seriell in parallel umwandelt,
- ein Blockcodierungsmodul (130), welches das parallelisierte Datensignal blockcodiert,
- ein Hadamard-Transformationsmodul (150), welches das blockcodierte Datensignal Hadamard-transformiert,
- ein IFFT-Modul (170), welches eine IFFT (inverse schnelle Fourier-Transformation) an dem Hadamard-transformierten Datensignal durchführt, und
- ein Parallel/Seriell-Umwandlungsmodul (190), welches das IFFTtransformierte Datensignal von parallel in seriell umwandelt, wobei das Blockcodierungsmodul dazu ausgelegt ist, das Datensignal durch Teilen des Datensignals in eine Mehrzahl Teilblöcke zu blockcodieren.

**12.** OFDM-Übertragungssystem nach Anspruch 11, wobei das Teilblockcodierungsmodul (130) eine Teilblockcodierung durchführt, um zu jedem Teilblock ein Prüfbit hinzuzufügen, damit die Anzahl gleichwertiger Bits in jedem Teilblock gerade gemacht werden kann.

**13.** OFDM-Übertragungssystem nach Anspruch 12, wobei das Teilblockcodierungsmodul (130) die Teilblockcodierung mit einer 3/4-Coderate durchführt.

## Revendications

**1.** Procédé de transmission d'un signal OFDM, comprenant les étapes de :

conversion d'un signal de données en train de bits de série à parallèle ;
codage par blocs du signal de données parallélisé ;
transformation selon Hadamard du signal de données codé par blocs ;
exécution d'une IFFT (transformée de Fourier rapide inverse) sur le signal de données transformé selon Hadamard ; et
conversion du signal de données transformé selon une IFFT (transformé selon une transformée de Fourier rapide inverse) de parallèle à série pour le transmettre ;

dans lequel l'étape de codage par blocs comprend une étape de codage par sous-blocs de codage par blocs du signal de données en divisant le signal de données en une pluralité de sous-blocs.

**2.** Procédé selon la revendication 1, dans lequel dans l'étape de codage par sous-blocs, un bit de contrôle est ajouté à chacun des sous-blocs pour permettre qu'un nombre de bits d'une même valeur devienne pair dans chacun des sous-blocs.

**3.** Procédé selon la revendication 2, dans lequel dans l'étape de codage par sous-blocs, chacun des sous-blocs codé par blocs comprend un signal de données à 3 bits et un bit de contrôle à 1 bit et dans lequel un taux de code 3/4 est utilisé.

**4.** Procédé de réception d'un signal OFDM, comprenant les étapes de :

réception d'un signal de données transmis par OFDM ;
conversion du signal de données reçu de série à parallèle ;
exécution d'une FFT (transformée de Fourier rapide) sur le signal de données parallélisé ;
exécution d'une transformée de Hadamard inverse sur le signal de données transformé par une transformée de Fourier rapide ;
décodage par blocs du signal de données transformé par une transformée de Hadamard inverse ; et
conversion du signal de données décodé en blocs de parallèle à série ;

dans lequel l'étape de décodage par blocs est une étape de décodage par sous-blocs consistant à décoder un signal de données codé par sous-blocs.

**5.** Procédé selon la revendication 4, dans lequel dans l'étape de décodage par sous-blocs, le signal de données codé par sous-blocs en ajoutant un bit de contrôle à chacun des sous-blocs pour permettre qu'un nombre de bits d'une même valeur devienne pair dans chaque sous-bloc est décodé.

**6.** Procédé selon la revendication 5, dans lequel dans l'étape de décodage par sous-blocs, le signal de données codé par sous-blocs à un taux de code 3/4 est décodé.

**7.** Terminal de communication mobile comprenant :

un module de conversion série à parallèle (210) recevant un signal de données transmis par OFDM et convertissant le signal de données reçu de série à parallèle ;
un module FFT (230) exécutant une FFT (transformée de Fourier rapide) sur le signal de données parallélisé ;

un module de transformée de Hadamard inverse (250) exécutant une transformée de Hadamard inverse sur le signal de données transformé par une transformée de Fourier rapide ;

un module de décodage par blocs (270) décodant par blocs le signal de données transformé par une transformée de Hadamard inverse ; et

un module de conversion parallèle à série (290) convertissant le signal de données décodé par blocs de parallèle à série :

dans lequel le module de décodage par blocs (270) est un module de décodage par sous-blocs décodant un signal de données codé par sous-blocs.

8. Terminal de communication mobile selon la revendication 7, dans lequel le module de décodage par sous-blocs (270) décode le signal de données codé par sous-blocs de telle façon qu'un bit de contrôle est ajouté à chaque sous-bloc pour permettre qu'un nombre de bits d'une même valeur devienne pair dans chaque sous-bloc.

9. Terminal de communication mobile selon la revendication 8, dans lequel le module de décodage par sous-blocs décode le signal de données codé par sous-blocs à un taux de code 3/4.

10. Terminal de communication mobile selon l'une quelconque des revendications 7 à 9, dans lequel le terminal de communication mobile est un terminal de diffusion.

11. Système de transmission OFDM (multiplexage par répartition orthogonale de la fréquence) comprenant :

un module de conversion série à parallèle (110) convertissant un signal de données en train de bits de série à parallèle ;

un module de codage par blocs (130) codant par blocs le signal de données parallélisé :

un module de transformée de Hadamard (150) transformant selon Hadamard le signal de données codé par blocs ;

un module IFFT (170) exécutant une IFFT (transformée de Fourier rapide inverse) sur le signal de données transformé selon Hadamard ; et

un module de conversion parallèle à série (190) convertissant le signal de données transformé selon une IFFT de parallèle à série ;

dans lequel le module de codage par blocs est adapté pour coder par blocs le signal de données en divisant le signal de données en une pluralité de sous-blocs.

12. Système de transmission OFDM selon la revendication 11, dans lequel le module de codage par blocs (130) exécute un codage par sous-blocs pour ajouter un bit de contrôle à chaque sous-bloc pour permettre qu'un nombre de bits d'une même valeur devienne pair dans chaque sous-bloc.

13. Système de transmission OFDM selon la revendication 12, dans lequel le module de codage par sous-blocs (130) exécute le codage par sous-blocs à un taux de codage 3/4.

FIG. 1

# FIG. 2

## FIG. 3A

## FIG. 3B

## FIG. 3C

## FIG. 3D

## FIG. 4

# FIG. 5

# FIG. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **M. Park et al.** PAPR reduction in OFDM transmission using Hadamard transform. *IEEE International Conference on Communications,* 18 June 2000, vol. 1-3, 430-433

- **A. E. Jones et al.** Block coding scheme for reduction of peak to mean envelope power ratio of multi carrier transmission schemes. *Electronics Letters,* 08 December 1994, vol. 30 (25), 2098, 2099